**Europäisches Patentamt**

**European Patent Office**

**Office européen des brevets**

(19)

(11) Publication number:

**0 361 962**

**A2**

(12) # EUROPEAN PATENT APPLICATION

(21) Application number: **89309986.1**

(22) Date of filing: **29.09.89**

(51) Int. Cl.⁵: **G01M 11/00**

(30) Priority: **30.09.88 GB 8823064**
**07.12.88 GB 8828506**

(43) Date of publication of application:
**04.04.90 Bulletin 90/14**

(84) Designated Contracting States:
**AT BE CH DE ES FR GB GR IT LI LU NL SE**

(71) Applicant: **BICC Public Limited Company**
**Devonshire House Mayfair Place**
**London W1X 5FH(GB)**

(72) Inventor: **Lewis, John Didwith**
**Fleetwood House Cross Lanes**
**Oscroft Chester CH3 8NQ(GB)**
Inventor: **Whitesmith, Peter John**
**1, Ashcroft Cottage Winsford Road**
**Wettenhall Wettenhall CW7 4DQ(GB)**
Inventor: **Grigsby, Richard**
**2, The Bruen**
**Tarvin Chester CH3 8JS(GB)**

(74) Representative: **Ross Gower, Edward Lewis et**
**al**
**BICC Group Patents & Licensing Department**
**Network House 1 Ariel Way**
**London W12 7SL(GB)**

(54) **Optical fibre monitoring.**

(57) A "clip-on" device for detecting whether or not an optical fibre F is carrying a light signal includes bending means 1 for controllably causing a portion of a fibre to be subjected to a gradually increasing amount of deformation and a first detector 7 for detecting light escaping from the bent fibre. A second detector 8 detects when the fibre has been subjected to a predetermined maximum amount of deformation. If light is detected by the first detector 7 a signal is sent to a control unit 9 which stops the bending means 1 from further increasing the amount of fibre deformation and gives a first output indication. If the second detector 8 detects that fibre deformation has reached the predetermined maximum amount and no light signal has been received, a signal is sent to the control unit 9 which stops the bending means 1 from further increasing the amount of fibre deformation and gives a second output indication. Preferably, the bending means 1 is in the form of a frustom of a cone which has in its curved surface a helically extending groove 5 and which can be helically driven about its axis. The leading end of an optical fibre F is initially disposed in the groove 5 at the larger end 3 of the mandrel 1 and the mandrel is rotatably driven about its axis.

## OPTICAL FIBRE MONITORING

This invention relates to the monitoring of optical fibres and is particularly concerned with apparatus for and a method of detecting whether or not an optical fibre is carrying a light signal.

An optical fibre comprises a core of material transparent to light, usually in the infra-red region. It is clad by a material of a refractive index lower than that of the material of the core so that light is constrained to travel down the core of the fibre by reflection from the cladding. By modulating the light, that is altering its amplitude or other characteristics, signals may be transmitted down the fibre. These signals may be used for a variety of purposes, from television broadcasts to computer data transmission.

There is frequently a requirment to detect whether or not a fibre is in service. One reason for this might be the case where a multiplicity of optical fibres is installed at the same time, but only a small number used. If one of the fibres in use becomes damaged or degraded in some way, then it can be replaced by a fibre not in use. If the repair is to be carried out some way along the route, it is important to be able to detect which fibres carry no traffic and are therefore available for use as spares.

It is an object of the present invention to provide improved apparatus for detecting whether or not an optical fibre is carrying a light signal, which improved apparatus can be used without causing undue disruption of the signal if one is present.

According to the invention, the improved apparatus comprises bending means for controllably causing at least a portion of an optical fibre to be subjected to a gradually increasing amount of deformation; first detecting means for detecting light escaping from the fibre; second detecting means for detecting when the fibre has been subjected to a predetermined maximum amount of deformation; and a control unit, the arrangement being such that if light is detected by the first detecting means a signal is sent to the control unit which stops the bending means from further increasing the amount of deformation of the fibre and gives a first output indication, and that if the second detecting means detects that the fibre has been subjected to its predetermined maximum amount of deformation and no signal has been received from the first detecting means a signal is sent to the control unit which stops the bending means from further increasing the amount of deformation of the fibre and gives a second output indication.

In a preferred embodiment of the invention, the improved apparatus comprises a body having a curved surface; drive means for moving an optical fibre and the curved surface of the body one relative to the other so as to cause at least a portion of the fibre to be subjected to a gradually increasing amount of deformation; first detecting means for detecting light escaping from the fibre; second detecting means for detecting when the fibre has been subjected to a predetermined maximum amount of deformation; and a control unit, the arrangement being such that if light is detected by the first detecting means a signal is sent to the control means which stops the drive means from further increasing the amount of deformation of the fibre and gives a first output indication, and that if the second detecting means detects that a fibre has been subjected to its predetermined maximum amount of deformation and no signal has been received from the first detecting means a signal is sent to the control unit which stops the drive means from further increasing the amount of deformation of the fibre and gives a second output indication.

The improved apparatus of the invention makes use of the phenomena known as deformation loss, which is the escape of light through the cladding of an optical fibre due to deformation of the fibre. Such deformation includes microbending, which is the bending of the fibre through a radius of an order of magnitude similar to the radius of the fibre itself, and macrobending, which is a bending of the fibre through a radius typically not less than ten times the radius of the fibre itself. If the deformation is extreme, most of the light will escape and the signal transmitted will be disrupted. When using the improved apparatus of the present invention, the amount of deformation of an optical fibre is increased gradually, and as soon as light is detected by the first detecting means, a signal is sent to stop further increase in the amount of deformation of the fibre. In this way, disruption of the signal, if one is present, is limited.

Preferably, the body having a curved surface is a mandrel with a curved surface whose radius of curvature decreases smoothly and gradually from a relatively large radius at one end of the mandrel to a relatively small radius at the other end of the mandrel. The mandrel is preferably in the form of a frustum of a cone. The drive means is conveniently adapted to cause an optical fibre to move from the larger end of the mandrel to the smaller end of the mandrel. In a preferred embodiment, the conical mandrel is rotatably mounted about its axis and the surface of the mandrel is provided with a groove which extends helically around the mandrel and so is of a gradually decreasing radius. In use, an optical fibre is constrained within the helically extending groove at the larger end of the mandrel and the mandrel is rotatably driven about its axis by the drive means so as to cause the optical fibre effectively to move around and along the mandrel towards the smaller end. This arrangement produces a gradual increase in the bending of an optical fibre, so that disruption to the signal, if one is present, can be readily limited.

Preferably, the improved apparatus includes at least one guide member for urging an optical fibre against the curved surface. Where a helically grooved conical mandrel is employed, the depth of the groove may vary to alter periodically the pressure applied on a fibre disposed between the or each guide member and the mandrel. The guide member, or at least one of the guide members, may be in the form of a light guide adapted to transmit light escaping from an optical fibre to the first detecting means, which may comprise one or more than one photodetector.

The second detecting means may comprise means for detecting when the fibre has reached the smaller end of the conical mandrel. The radius of the smaller end of the mandrel may constitute the predetermined maximum extent of bending of an optical fibre at which, if no escaping light has been detected, it is concluded that the fibre is not carrying a signal.

The invention further includes an improved method of detecting whether or not an optical fibre is carrying a light signal, which method comprises the steps of subjecting the fibre to a gradually increasing amount of deformation, continuously detecting for escape of light from the fibre and continuously monitoring the amount of deformation of the fibre; and, when escaping light is first detected or when deformation of the fibre has reached a predetermined maximum value and no escaping light has been detected, stopping increase in deformation of the fibre.

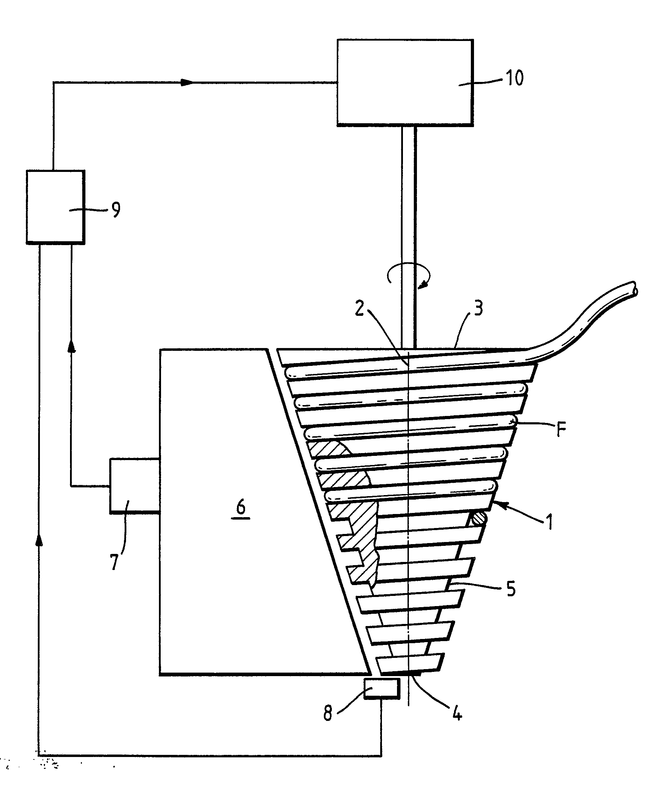

The invention is further illustrated by a description, by way of example, of preferred apparatus for detecting whether or not an optical fibre is carrying a light signal, with reference to the accompanying drawing which shows a diagrammatic side view of the preferred apparatus.

Referring to the drawing, the apparatus comprises a mandrel 1 in the shape of a frustum of a cone which is rotatably mounted about its axis 2 and which can be rotatably driven about its axis by a drive motor 10. Extending helically in the curved surface of the mandrel 1 from the larger end 3 of the mandrel to the smaller end 4 is a groove 5 of a gradually decreasing radius. The radius of the groove 5 at the smaller end of the mandrel 1 constitutes the predetermined maximum amount of deformation to which an optical fibre is to be subjected. Positioned adjacent the helically grooved surface of the mandrel 1 is a light guide 6 for urging an optical fibre disposed in the helical groove 5 against the curved surface of the mandrel and for transmitting light escaping from the fibre to a photodetector 7 constituting the first detecting means. Adjacent the smaller end of the conical mandrel 1 is a detector 8 which constitutes the second detecting means and which serves to detect when an optical fibre reaches the smaller end of the mandrel.

In use, the leading end of an optical fibre F which is to be monitored to ascertain whether or not it carries a light signal, is disposed in the helical groove 5 at the larger end 3 of the mandrel 1 and the mandrel is rotatably driven about its axis by the drive motor 10 to cause the optical fibre effectively to move gradually around and towards the smaller end of the mandrel. At the same time, the light detector 7 continuously detects for escape of light from the optical fibre and the detector 8 continuously monitors for when the optical fibre F reaches the smaller end 4 of the mandrel 1 when, as has been explained, the amount of deformation of the fibre will be at the predetermined maximum value. When escaping light is first detected by the light detector 7, or when the fibre F has reached the smaller end of the mandrel 1 and deformation of the fibre has reached the predetermined maximum amount and no escaping light has been detected, control means 9 to which the light detector 7 and the detector 8 are operatively coupled stops the drive motor 10 to stop rotation of the mandrel and gives an output indication appropriate to the detection of escaping light or the predetermined maximum amount of deformation of the fibre.

## Claims

1. Apparatus for detecting whether or not an optical fibre (F) is carrying a light signal, which apparatus comprises bending means (1) for controllably causing at least a portion of an optical fibre to be subjected to a gradually increasing amount of deformation; first detecting means (7) for detecting light escaping from the fibre; second detecting means (8) for detecting when the fibre has been subjected to a predetermined maximum amount of deformation; and a control unit (9), the arrangement being such that if light is detected by the first detecting means (7) a signal is sent to the control unit (9) which stops the bending means (1) from further increasing the amount of deformation of the fibre (F) and gives a first output indication, and that if the second detecting means (8) detects that the fibre (F) has been subjected to its predetermined maximum amount of deformation and no signal has been received from the first detecting means (7) a signal is sent to the control unit (9) which stops the bending means (1) from further increasing the amount of deformation of the fibre (F) and gives a second output indication.

2. Apparatus as claimed in Claim 1, wherein the bending means comprises, in combination, a body (1) having a curved surface and drive means (10) for moving an optical fibre (F) and the curved surface of the body one relative to the other so as to cause at least a portion of the fibre to be subjected to a gradually increasing amount of deformation, the arrangement being such that if light is detected by the first detecting means (7) a signal is sent to the control unit (9) which stops the drive means (10) and that if the second detecting means (8) detects that the fibre (F) has been subjected to its predetermined maximum amount of deformation and no signal has been received from the first detecting means (7) a signal is sent to the control unit (9) which stops the drive means (10).

3. Apparatus as claimed in Claim 2, wherein the body (1) having a curved surface comprises a mandrel with a curved surface whose radius of curvature decreases gradually from a large radius at one end (3) of the mandrel to a relatively small radius at the other end (4) of the mandrel.

4. Apparatus as claimed in Claim 3, wherein the mandrel (1) is in the form of a frustum of a cone.

5. Apparatus as claimed in Claim 3 or 4, wherein the drive means (10) is adapted to cause an optical fibre (F) to move from the larger end (3) of the mandrel (1) to the smaller end (4) of the mandrel.

6. Apparatus as claimed in Claim 4, wherein the conical mandrel (1) is rotatably mounted about its axis (2) and the curved surface of the mandrel is provided with a groove (5) which extends helically around the mandrel and so is of a gradually decreasing radius, the arrangement being such that, when an optical fibre (F) is disposed within the groove (5) at the larger end (3) of the mandrel and the mandrel is rotatably driven about its axis by the drive means (10), the optical fibre is caused effectively to move around and along the mandrel towards the smaller end (4).

7. Apparatus as claimed in Claim 5 or 6, wherein the second detecting means (8) comprises means for detecting when an optical fibre has reached the smaller end of the mandrel.

8. Apparatus as claimed in any one of Claims 2 to 7, which apparatus includes at least one guide member (6) for urging an optical fibre against the curved surface.

9. Apparatus as claimed in Claim 8, wherein the guide member (6), or at least one of the guide members, is in the form of a light guide adapted to transmit light escaping from the fibre to the first detecting means (7).

10. A method of detecting whether or not an optical fibre is carrying a light signal, which method comprises the steps of subjecting the fibre to a gradually increasing amount of deformation; continuously detecting for escape of light from the fibre and continuously monitoring the amount of deformation of the fibre; and, when escaping light is first detected or when deformation of the fibre has reached a predetermined maximum value and no escaping light has been detected, stopping increase in deformation of the fibre.